# EUROPÄISCHE PATENTSCHRIFT

(11) **EP 0 863 032 B1**
(45) Veröffentlichungstag und Bekanntmachung des Hinweises auf die Patenterteilung: **12.06.2002**
(21) Anmeldenummer: 97103808.8
(22) Anmeldetag: 07.03.1997
(51) Int. Cl.: B60J 7/185, E05B 5/00

(54) **Verschluss für ein Verdeck, insbesondere eines Personenkraftwagens**
Lock for convertible top, particularly for motor vehicle
Verrouillage pour un toit convertible, en particulier pour véhicule automobile

(43) Veröffentlichungstag der Anmeldung: 09.09.1998
(73) Patentinhaber: Dr.Ing.h.c. F. Porsche Aktiengesellschaft, 70435 Stuttgart (DE)
(72) Erfinder: Homann, Bodo, 71296 Heimsheim (DE); Möbius, Wolfgang, 71701 Schwieberdingen (DE); Droste, Hans, 71229 Leonberg (DE); Armbruster, Reiner, 72275 Alpirsbach (DE)

(56) Entgegenhaltungen:
- GB-A- 1 514 733
- GB-A- 2 267 116

## Beschreibung

Die Erfindung betrifft einen Verschluß für ein Verdeck eines Fahrzeuges, insbesondere eines Personenkraftwagens gemäß dem Oberbegriff des Patentanspruchs 1.

Ein bekannter Verschluß der eingangs genannten Gattung (DE 93 02 292 U) umfaßt ein verdeckseitig angeordnetes Gehäuse mit einem Betätigungselement sowie einen verschwenkbaren Verschlußhaken. Der Verschlußhaken wirkt in Verriegelungsstellung des Verschlusses mit einer am vorgelagerten Windschutzscheibenrahmen angebrachten Kulisse zusammen, wogegen sich das durch einen langgestreckten Handgriff gebildete Betätigungselement mit seinem freien Ende vom Windschutzscheibenrahmen weg nach hinten hin erstreckt.

Dieser Anordnung haftet der Nachteil an, daß zum Hintergreifen des freien Endes des Betätigungselementes ein relativ hoher Spalt zwischen der Unterseite des Verdecks und dem Betätigungselement vorgesehen ist, wodurch das Betätigungselement relativ weit nach unten in Richtung Fahrgastraum ragt.

Bei großen Fahrzeuginsassen besteht somit die Gefahr, daß das Betätigungselement in den Kopfaufschlagbereich hineinragt. Zudem sind in der Schließstellung des Verschlusses neben dem langgestreckten Handgriff noch das Gehäuse und der Verschlußhaken vom Fahrgastraum aus sichtbar, was aus optischen Gründen als störend empfunden wird.

Aufgabe der Erfindung ist es, einen Verschluß zum Festlegen eines Verdecks an einem benachbarten aufbauseitigen Rahmen so weiterzuentwickeln, daß der Verschluß in seiner Schließstellung die angrenzende dem Fahrgastraum zugekehrte Verdeckkontur nicht nach unten hin überragt und der Verschluß in dieser Stellung ein unauffälliges Aussehen aufweist, das Betätigungselement beim Öffnungsvorgang des Verschlusses jedoch eine griffgünstige Lage einnimmt.

Erfindungsgemäß wird diese Aufgabe durch die kennzeichnenden Merkmale des Anspruchs 1 gelöst. Weitere, die Erfindung in vorteilhafter Weise ausgestaltende Merkmaie enthalten die Unteransprüche.

Die mit der Erfindung hauptsächlich erzielten Vorteile sind darin zu sehen, daß durch die versenkte Anordnung des zwei Betätigungselemente aufweisenden Verschlusses in einer Ausnehmung des Verdeckrahmens in Schließstellung des Verschlusses keine gegenüber dem Verdeckrahmen vorstehenden Teile vorhanden sind, die in den Kopfaufschlagbereich eines Fahrzeuginsassen hineinragen.

Durch Betätigen des ersten Betätigungseiementes wird das zweite Betätigungselement in eine abgesenkte Greifstellung bewegt, so daß beim Öffnungs- oder Schließvorgang ein gutes Handlung gewährleistet ist. Das erste Betätigungselement ist als Druckpiatte ausgebildet, die von einem plattenförmigen Bügelabschnitt eines das zweite Betätigungselement bildenden Bügelgriffs umgeben ist.

Neben der Übertotpunktlage in Schließstellung ist der Verschlußhaken über eine, einen einfachen Aufbau aufweisende Rasteinrichtung zusätzlich arretiert. Die zusätzliche Arretierung läßt sich erst durch Betätigen der Druckplatte aufheben.

Darüberhinaus ist der Bügelgriff auch in seiner zurückgeklappten Offenstellung arretiert, so daß er als Zuggriff zum manuellen Verlagern des Verdeck in die heckseitige Ablagestellung verwendbar ist. Der mittige Verschluß gewährleistet eine einfache Einhandbedienung. In der Greifstellung des Bügelgriffs ist die Verriegelung zwischen Kulisse und Verschlußhaken noch voll wirksam.

Die beiden Betätigungselemente verlaufen in der Schließstellung oberflächenbündig zueinander und zu den angrenzenden Innenkonturen des Verdeckrahmens und der Kulisse. In der Schließstellung des Verschlusses sind an der Innenseite des Verdecks keine vorstehenden Teile vorhanden und die beiden Betätigungseiemente bilden quasi abschnittsweise die Innenverkleidung.

Ein Ausführungsbeispiel der Erfindung ist in den Zeichnungen dargestellt und wird im folgenden näher beschrieben.

Es zeigen
- Fig. 1: eine perspektivische Teilansicht von schräg hinten auf ein Fahrzeug mit einem Verdeck in Schließstellung,
- Fig. 2: einen Schnitt nach der Linie II-II der Fig. 1 in größerem Maßstab, die eine seitliche Zentriereinrichtung zeigt,
- Fig. 3: einen Schnitt nach der Linie III-III der Fig. 1 in größerem Maßstab mit dem mittigen Verschluß in Schließstellung E,
- Fig. 4: einen Schnitt ähnlich Fig. 3, wobei das zweite Betätigungselement des Verschlusses seine Greifstellung F einnimmt,
- Fig. 5: einen Schnitt ähnlich Fig. 3, wobei die Offenstellung G des Verschlusses gezeigt ist,
- Fig. 6: eine Hälfte des spiegelbildlich ausgebildeten Verschlusses in der Draufsicht,
- Fig. 7: einen Schnitt nach der Linie VII-VII der Fig. 6
- Fig. 8: einen Teilschnitt nach der Linie III-VIII der Fig. 3,
- Fig. 9: einen Teilnschnitt nach der Linie IX-IX der Fig. 3,
- Fig. 10: einen Teilschnitt nach der Linie X-X der Fig. 3,
- Fig. 11: eine Ansicht von unten auf beide Betätigungselemente des Verschlusses in Schließstellung,

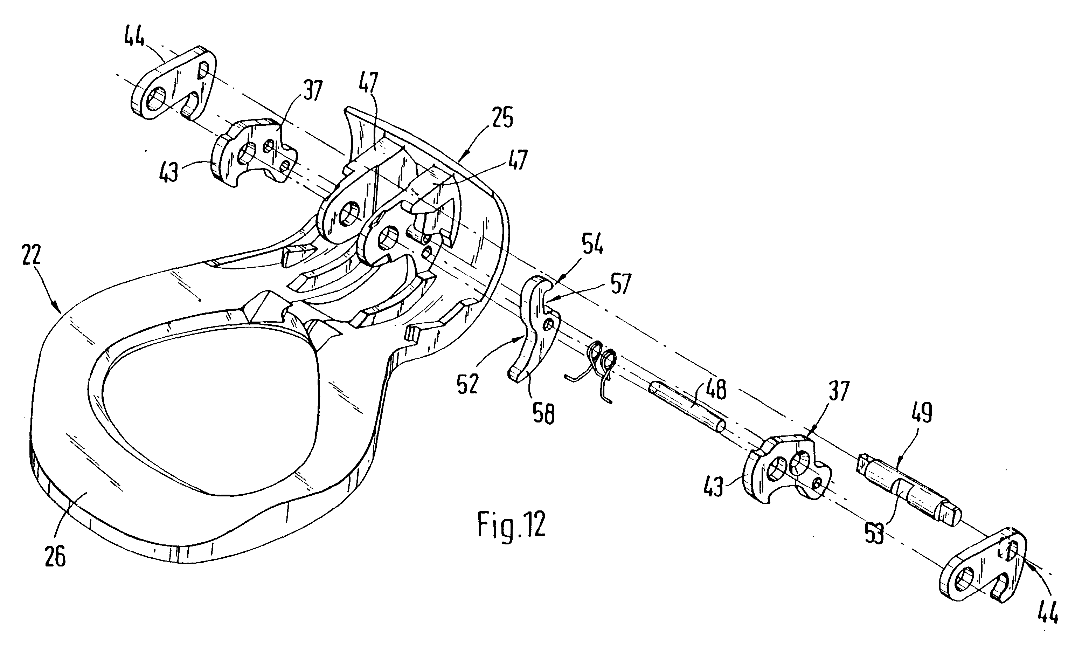

- Fig. 12: eine perspektivische Ansicht auf den Bügelgriff und Funktionselemente des Verschlusses,
- Fig. 13: eine perspektivische Ansicht auf die Drucktaste und Funktionselemente des Verschlusses,
- Fig. 14: eine perspektivische Ansicht auf die Bauteile des Verschlußhakens,

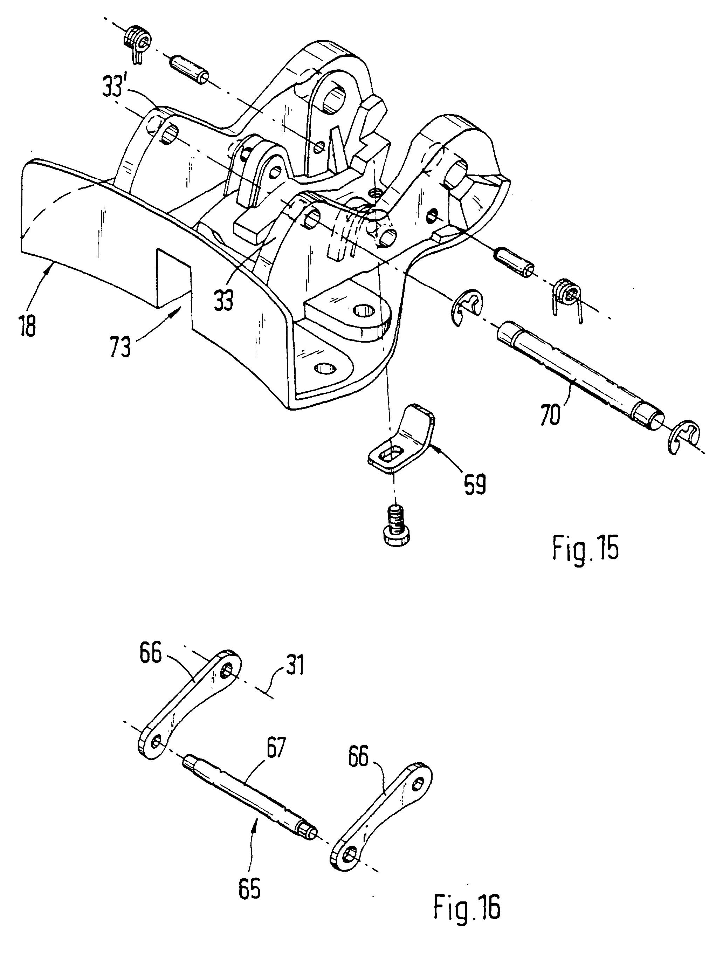

- Fig. 15: eine perspektivische Ansicht auf das Gehäuse des Verschlusses mit Funktionselementen,
- Fig. 16: eine perspektivische Ansicht auf die federbelastete Schwinge des Verschlusses,

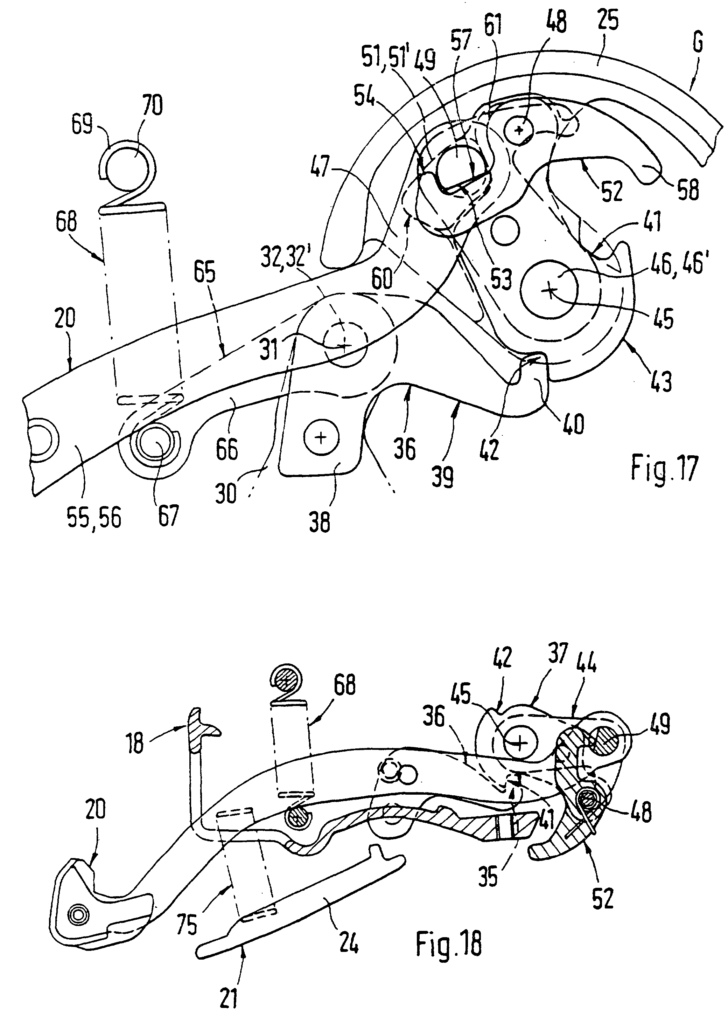

- Fig. 17: einen Ausschnitt X der Fig. 5 in größerem Maßstab,
- Fig. 18: die wesentlichen Funktionselemente des Verschlusses entsprechend Fig. 3 ohne das Gehäuse und den Bügelgriff.

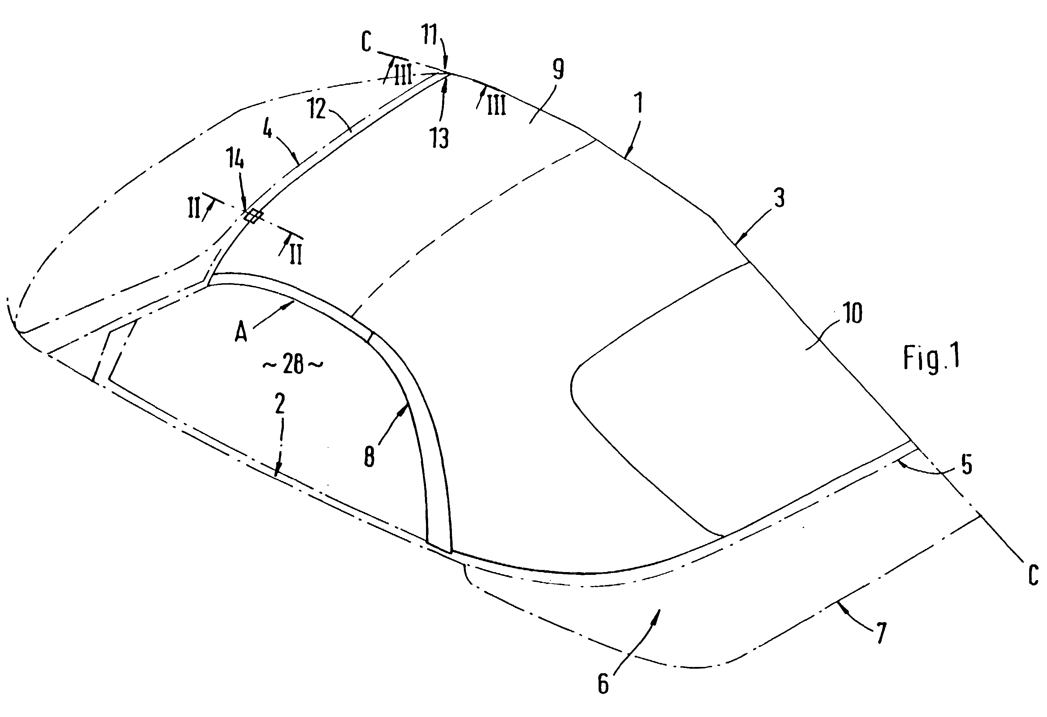

Fig. 1 zeigt einen Teilbereich eines Personenkraftwagens 1, der oberhalb einer Gürtellinie 2 ein Verdeck 3 aufweist. Das Verdeck 3 erstreckt sich im Ausführungsbeispiel in seiner Schließstellung A zwischen einem durch einen Windschutzscheibenrahmen gebildeten aufbauseitigen Rahmen 4 und einem Heckbereich 5. Der aufbauseitige Rahmen 4 kann aber auch durch einen Überrollbügel gebildet werden. Im Heckbereich 5 ist ein Verdeckkasten 6 vorgesehen, der zumindest bereichsweise durch einen Verdeckkastendeckel 7 nach oben hin abgedeckt ist. Das von einer Schließstellung A in eine nicht näher dargestellte heckseitige Ablagestellung B und umgekehrt verlagerbare Verdeck 3 wird im Ausführungsbeispiel durch ein Faltverdeck gebildet, das sich aus einem am Aufbau schwenkbar angelenkten Verdeckgestell 8 und einem am Verdeckgestell 8 in Lage gehaltenen elastischen Verdeckbezug 9 zusammensetzt. Im hinteren Bereich des Verdeckbezug 9 ist eine Sichtscheibe 10 vorgesehen, die durch eine flexible oder starre Heckscheibe gebildet wird.

Das Verdeck 3 ist mittels einer lösbaren Verriegelungsvorrichtung 11 an einem oberen Querverlaufenden Bereich 12 des aufbauseitigen Rahmens 4 in seiner Schließstellung A in Lage gehalten.

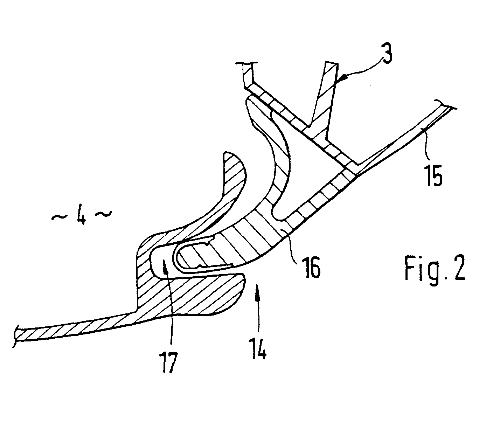

Die Verriegelungsvorrichtung 11 umfaßt im Ausführungsbeispiel lediglich einen im Bereich einer Fahrzeuglängsmittelebene C-C angeordneten Verschluß 13 und zwei seitlich außenliegende Zentriereinrichtungen 14. Es können aber auch zwei mit Abstand zueinander angeordnete Verschlüsse 13 vorgesehen sein. Mittels der beiden Zentriereinrichtungen 14 wird das Verdeck 3 in Fahrzeugquer- und in Fahrzeughöhenrichtung festgelegt (Fig. 2). Jede Zentriereinrichtung 14 umfaßt ein an einem vorderen formsteifen Verdeckrahmen 15 angeordnetes, vorstehendes Zentrierelement 16, das in Schließstellung A des Verdecks 3 mit einer korrespondierenden Aufnahme 17 des Rahmens 4 zusammenwirkt. Das Zentrierelement 16 ist am Verdeckrahmen 15 befestigt. Der formsteife vordere Verdeckrahmen 15 wird durch ein großflachiges Gußteil aus einer Leichtmetallegierung gebildet.

Der als Kniehebelverschluß ausgebildete, mittig angeordnete Verschluß 13 umfaßt im wesentlichen ein an der Unterseite des formsteifen vorderen Verdeckrahmens 15 befestigtes Gehäuse 18, einen in seiner Verriegelungsstellung D mit einer am Rahmen 4 angeordneten Kulisse 19 in Wirkverbindung stehenden Verschlußhaken 20 sowie erste und zweite Betätigungselemente 21, 22. Mittels des Verschlusses 13 wird das Verdeck 3 in Längsrichtung gegen den feststehenden Rahmen 4 gespannt.

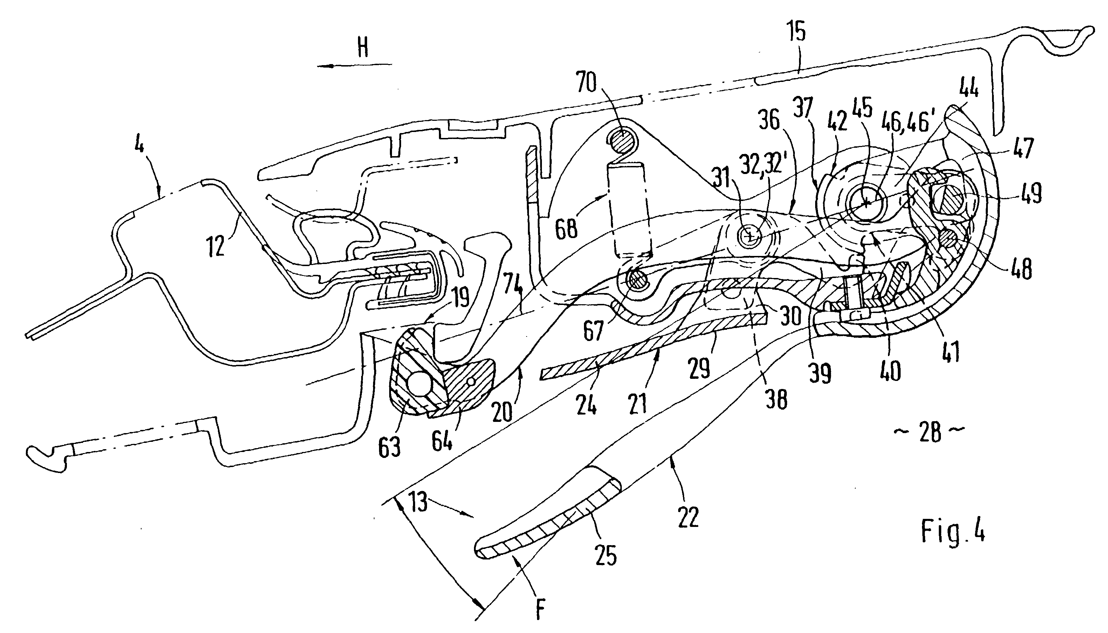

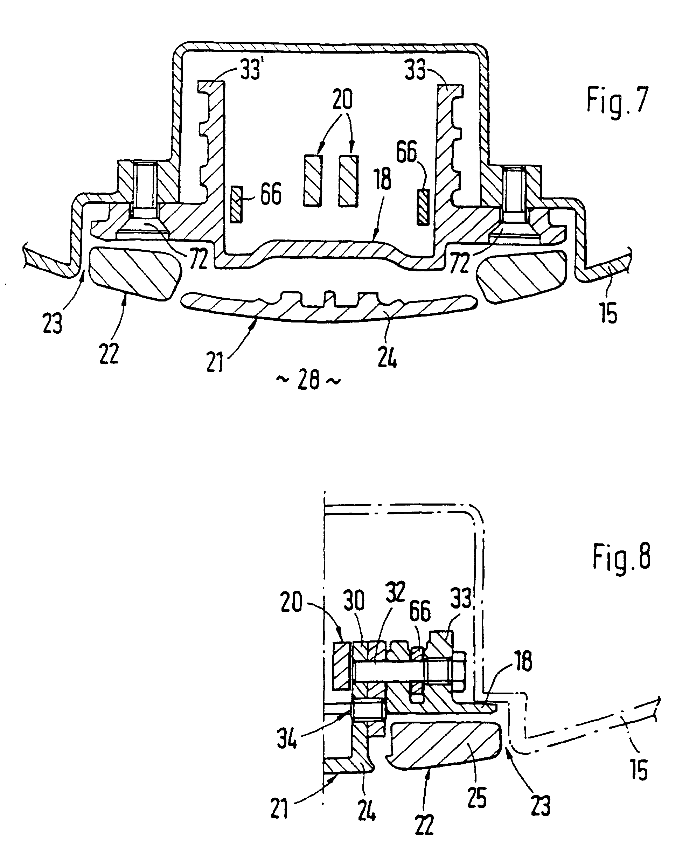

In Schließstellung E des Verschlusses 13 sind die beiden Betätigungselemente 21, 22 versenkt in einer muldenförmigen Ausnehmung 23 des formsteifen vorderen Verdeckrahmens 15 angeordnet (Fig. 7). Die beiden Betätigungselemente 21, 22 wirken dergestalt zusammen, daß erst nach Betätigen des ersten Betätigungselementes 21 das zweite Betätigungselement 22 in eine abgesenkte Greifstellung F bewegt wird (Fig. 4).

Die beiden Betätigungselemente 21, 22 verlaufen in der Schließstellung E des Verschlusses 13 oberflächenbündig zueinander und zu den angrenzenden dem Fahrgastraum 28 zugekehrten Konturen des Verdeckrahmens 15 und der Kulisse 19. Das erste Betätigungselement 21 ist als federbelastete Drucktaste 24 ausgebildet, wogegen das zweite Betätigungselement 22 im Ausführungsbeispiel durch einen federbelasteten Bügelgriff 25 gebildet wird. Das zweite Betätigungselement 22 könnte jedoch auch als T-Griff oder länglicher Griff ausgebildet sein. Eine oder mehrere Schenkelfedern beaufschlagen den Bügelgriff 25 derart, daß er in Richtung Griffstellung F bewegt wird.

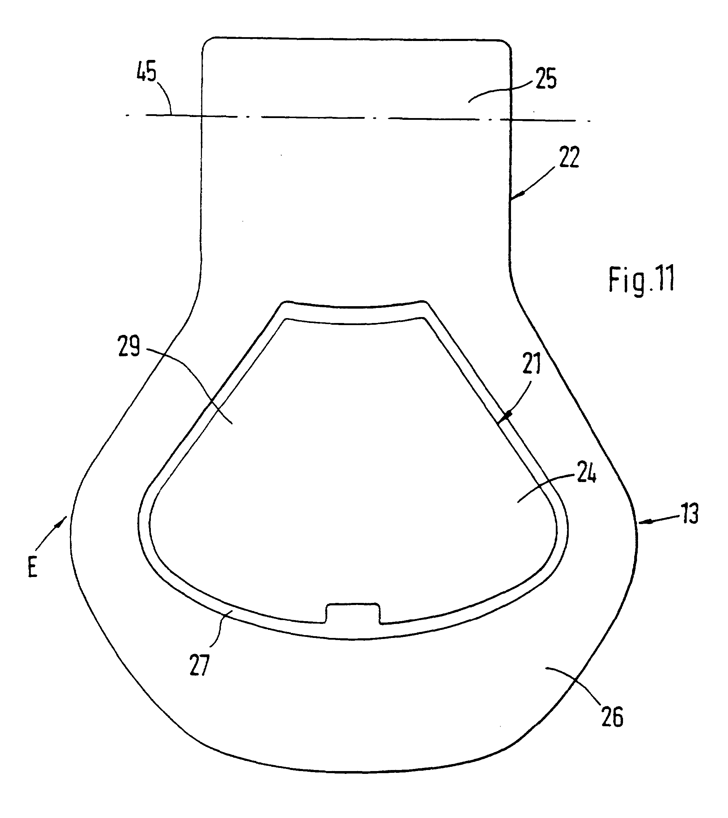

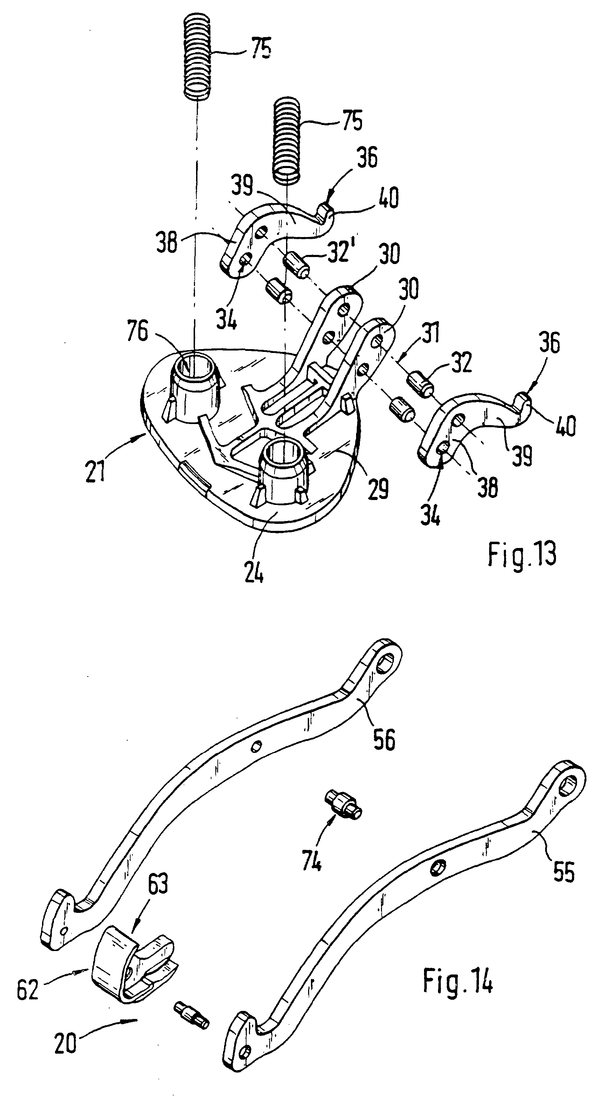

In der Schließstellung E des Verschlusses 13 wird die Drucktaste 24 von einem plattenförmigen Griffabschnitt 26 des Bügelgriffes 25 umgeben, wobei zwischen Griffabschnitt 26 und innenliegender Drucktaste 24 ein umlaufender Spalt 27 verläuft (Fig. 11). Die beiden Betätigungselemente 21, 22 decken in Schließstellung E des Verschlusses 13 das Gehäuse 18, den Verschlußhaken 20 und weitere Funktionsbauteile des Verschlusses 13 zum Fahrgastraum 28 hin nahezu vollständig ab. Die Unterseiten der beiden Betätigungseiemente 21, 22 bilden in Schließstellung E quasi eine Innenraumverkleidung. Die aus einem unteren plattenförmigen Abschnitt 29 und zwei nach oben ragenden aufrechten Stegen 30 zusammengesetzte Drucktaste 24 ist um eine querverlaufende, etwa horizontal ausgerichtete erste Drehachse 31 des Gehäuses 18 schwenkbar gelagert (Fig. 13). Der plattenförmige Abschnitt 29 weist auf der den Fahrgastraum 28 zugekehrten Seite in Längsrichtung und Querrichtung einen gebogenen Formverlauf auf. Die ortsfeste erste Drehachse 31 umfaßt im Ausführungsbeispiel zwei miteinander fluchtende Bolzen 32, 32', die an beabstandeten Wandungen 33, 33' des Gehäuses 18 in Lage gehalten sind. Die Bolzen 32, 32' überragen die inneren Wandungen 33, 33' in Richtung Verschlußhaken 20. Zwischen den beiden Wandungen 33, 33' ist auf dem Bolzen 32, 32' jeweils ein seitlicher Arm 66 einer Schwinge 65 schwenkbar gelagert. Die aufrechten Stege 30 der Drucktaste 24 sind durch Öffnungen des Gehäuses 18 hindurchgeführt und drehbar mit den inneren Enden der Bolzen 32, 32' verbunden. Die erste Drehachse 31 erstreckt sich in Längsrichtung gesehen etwa in einem mittleren Bereich der Längserstreckung des Gehäuses 18. Die Drucktaste 24 steht über eine Rasteinrichtung 35 mit dem Bügelgriff 25 in Wirkverbindung.

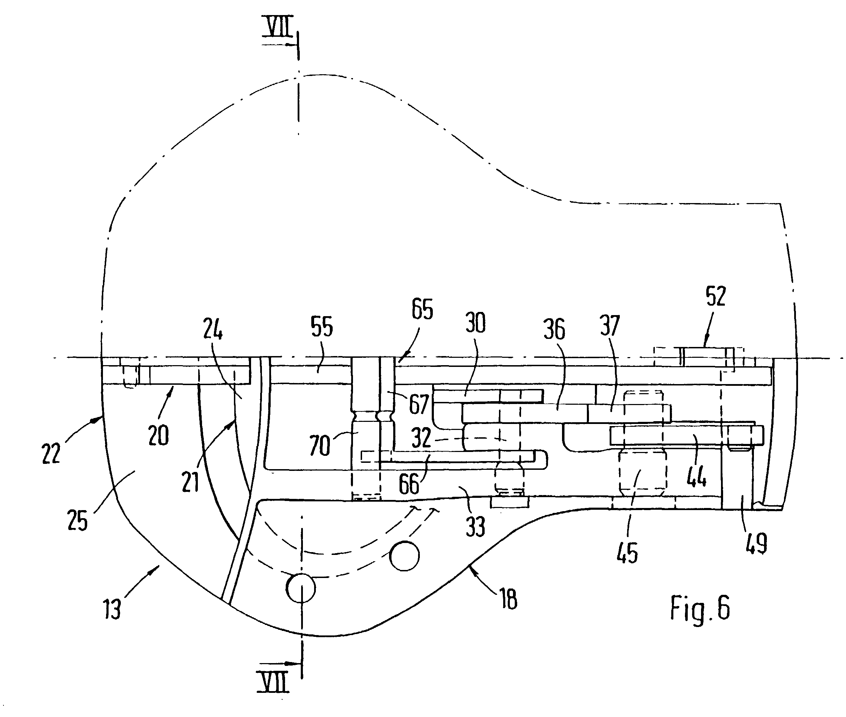

Die Rasteinrichtung 35 umfaßt zumindest eine an der Drucktaste 24 befestigte äußere Sperrklinke 36, die mit einer am Bügelgriff 25 in Lage gehaltenen Funktionsscheibe 37 zusammenwirkt. Im Ausführungsbeispiel setzt sich die Rasteinrichtung 35 aus zwei Sperrklinken 36 und zwei Funktionsscheiben 37 zusammen.
Jede äußere Sperklinke 36 ist um den Bolzen 32, 32' der ersten Drehachse 31 schwenkbar gelagert und zwar zwischen der inneren Wandung 33 und dem Steg 30. Ein nach unten gerichteter erster Schenkel 38 der äußeren Sperrklinke 36 ist unterhalb der ersten Drehachse 31 bei 34 fest mit dem Steg 30 der Druckplatte 24 verbunden (durch Nieten, Schrauben, Schweißen, einen Stift oder dergleichen). Am hinteren Ende eines zweiten, sich in Fahrzeuglängsrichtung erstreckenden Schenkels 39 jeder äußeren Sperrklinke 36 ist eine nach oben gerichtete nasenförmige Abstellung 40 vorgesehen, die je nach Endstellung (Schließstellung E oder Offenstellung G) des Bügelgriffes 25 mit einer von zwei Rasten 41, 42 der Funktionsscheibe 37 zusammenwirkt, Zwischen beiden Rasten 41, 42 ist an der Funktionsscheibe 37 eine kreisbogenförmige Anlauffläche 43 vorgesehen (Fig. 6).

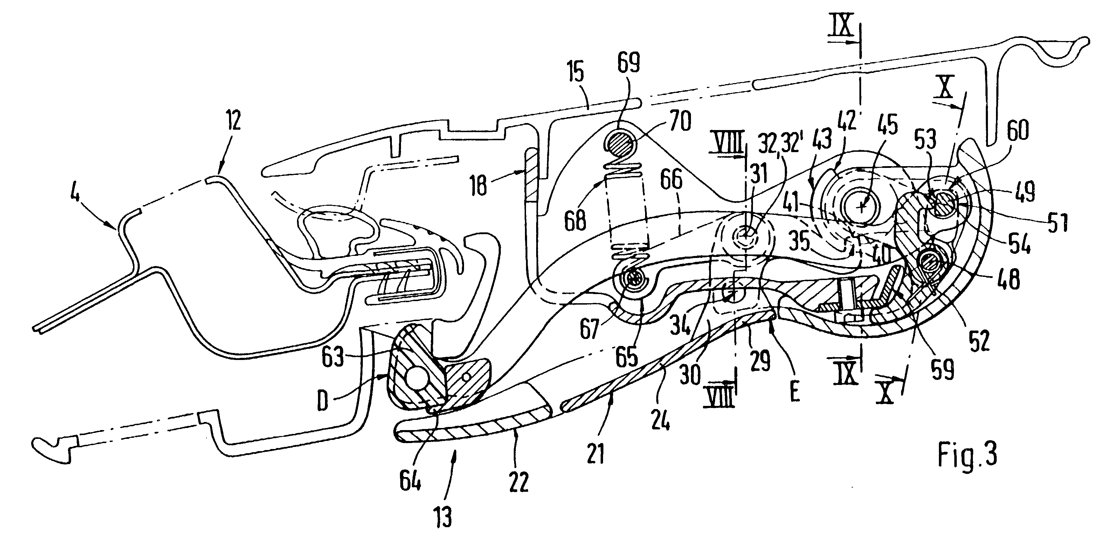

in Schließstellung E des Bügelgriffes 25 wirkt die Abstellung 40 mit der Raste 41 der Funktionsscheibe 37 zusammen und der Bügelgriff 25 wird in dieser Stellung arretiert, wobei sich diese Raste 41 manuell nicht überdrücken läßt. Die in Fig. 3 dargestellte Arretierung kann nur durch Betätigen der Drucktaste 24 aufgehoben werden, da durch das Verschwenken der Drucktaste 24 die äußeren Sperrklinken 36 aus den Rasten 41 freigeschwenkt werden (siehe Greifstellung F in Fig. 4).

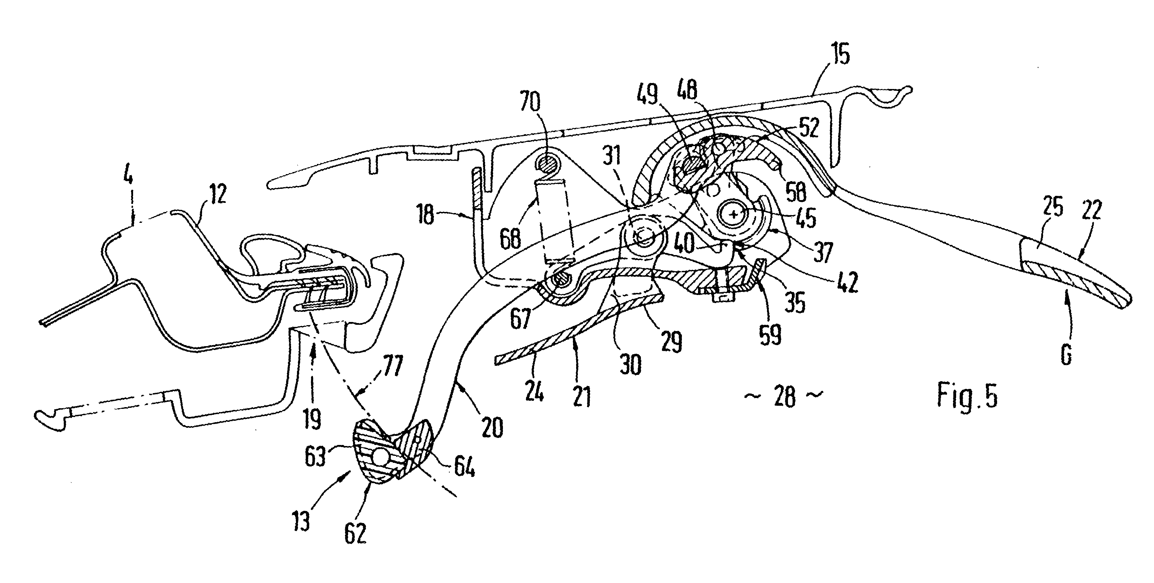

In der Offenstellung G des Bügelgriffs (Fig. 5) steht die Abstellung 40 mit der anderen Raste 42 in Wirkverbindung, dergestalt, daß der Bügelgriff 25 relativ zum Gehäuse 18 arretiert ist. Dadurch läßt sich der Bügelgriff 25 als Zuggriff zum manuellen Verlagern des Verdecks 3 in die Ablagestellung B verwenden. Der Bügelgriff 25 wirkt über zumindest einen Antriebshebel 44 mit dem Verschlußhaken 20 zusammen und ist um eine querverlaufende, etwa horizontal ausgerichtete zweite Drehachse 45 drehbar mit dem Gehäuse 18 verbunden.

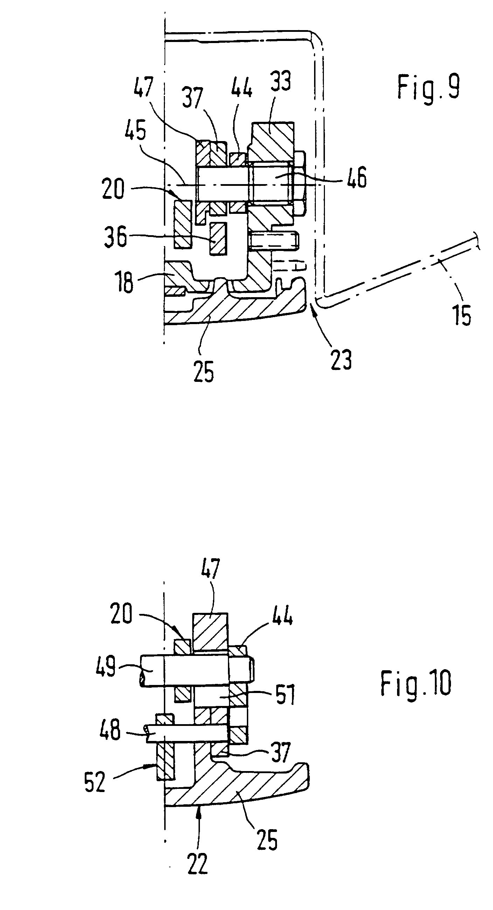

Die zweite Drehachse 45 liegt in Fahrtrichtung H gesehen weiter hinten und etwas höher als die erste Drehachse 31. Gemäß Fig. 9 wird die zweite Drehachse 45 durch zwei miteinander fluchtende Bolzen 46, 46' gebildet, die sich beiderseits des mittigen Verschlußhakens 20 erstrecken und die an aufrechten Wandungen des Gehäuses 18 in Lage gehalten sind. Auf beiden Bolzen 46, 46' ist von außen nach innen gesehen jeweils ein Ende des Antriebshebels 44, die Funktionsscheibe 37 und eine abgestellte aufrechte Lasche 47 des Bügelgriffs 25 drehbar gelagert. Jede Funktionsscheibe 37 ist entfernt von der zweiten Drehachse 45 über einen weiteren querverlaufenden Bolzen 48 am Bügelgriff 25 befestigt. Der Bolzen 48 ist durch kreisrunde Öffnungen der Laschen 47 hindurchgeführt und in Querrichtung durch eine Nase des Antriebshebels 44 gegen axiales Verschieben gesichert.

Der sich in Fahrzeuglängsrichtung erstreckende Verschiußhaken 20 ist an seinem einen Ende an einem Bolzen 49 drehbar gelagert, wobei der Bolzen 49 mit den hinteren Enden 50 von beabstandeten Antriebshebeln 44 fest verbunden ist und durch Schlitzöffnungen 51, 51' der Laschen 47, 47' des Bügelgriffs 25 hindurchragt (Fig. 10). Die Schlitzöffnungen 51, 51' sind in der Breite nur geringfügig größer als der Durchmesser des Bolzens 49. Sie weisen jedoch eine wesentlich größere Höhenerstreckung auf als der Durchmesser des Bolzens 49, so daß eine Relativbewegung zwischen dem Bügelgriff 25 und dem Verschlußhaken 20 ermöglicht wird. Die seitlichen Begrenzungen der Schlitzöffnungen 51, 51' werden durch Kreisbogenabschnitte gebildet. Der Bolzen 49 weist auf der einer mittleren Sperrklinke 52 zugekehrten Seite zumindest örtlich eine Abflachung 53 auf, an der sich eine Nase 54 der Sperrklinke 52 in Schließstellung E des Verschlusses 13 abstützt.

Die mittlere Sperrklinke 52 ist auf dem querverlaufenden Bolzen 48 des Bügelgriffs 25 schwenkbar gelagert und erstreckt sich abschnittsweise zwischen den beiden mit geringem Abstand zueinander verlaufenden plattenförmigen Teilen 55, 56 des Verschlußhakens 20 und wird durch diese in Querrichtung geführt (Fig. 14). Beim Betätigen, d.h. beim nach oben Drücken der Drucktaste 24 wird der Bolzen 49 von einer sich an die Nase 54 anschließenden etwa U-förmigen Ausnehmung 57 umgriffen, so daß der Bügelgriff 25 ohne Mitbewegen des Verschlußhakens 20 infolge der Schlitzöffnungen 51, 51' von der Schließstellung E in die Greifstellung F verlagerbar ist und umgekehrt. Ein unterer Schenkel 58 der mittleren Sperrklinke 52 wirkt beim Öffnungs- und Schließvorgang mit seinem freien Ende mit einer gehäuseseitigen Führungsbahn 59 zusammen. In der Schließstellung E des Bügelgriffes 25 verläuft der Bolzen 49 am oberen Rand 60 der Schlitzöffnung 51, 51' und die Nase 54 der Sperrklinke 52 stützt sich an der Abflachung 53 ab. Beim Betätigen der Drucktaste 24 werden die äußeren Sperrklinken 36 im Uhrzeigersinn verschwenkt, so daß der Bügelgriff 25 mit den Funktionsscheiben 37 eine Bewegung entgegen dem Uhrzeigersinn ausübt. Dadurch gelangt der Bolzen 49 in die darunterliegende Ausnehmung 57 der mittleren Sperrklinke 52. Durch das Gewicht und eine eventuelle Federunterstützung z.B. Torsionsfeder wandert der Bügelgriff 25 nach unten in die Greifstellung F. In dieser Stellung liegt der Bolzen 49 am unteren Rand 61 der Schlitzöffnung 51, 51' an. Während der nachfolgenden Öffnungsbewegung des Bügelgriffs 25 umgreift die Nase 54 den Bolzen 49 und überlagert durch die Sperrklinke 52 das Schließdrehmoment über den Bolzen 49 auf das Betätigungselement 22.

Die beiden plattenförmigen Teile 55, 56 des Verschlußhakens 20 sind im vorderen und mittleren Bereich ihrer Längserstreckung örtlich miteinander verbunden (Gleitelement 63, Abstandshalter 74). Zur Vermeidung von Geräuschen ist der der Kulisse 19 zugekehrte Endbereich 62 des Verschlußhakens 20 mit einem Gleitelement 63 aus gleitfähigem Kunststoff versehen (Fig. 14).

Benachbart des Gleitelementes 63 ist zwischen beiden plattenförmigen Teilen 55, 56 ein Schaumstoff- oder Gummiteil 64 eingespannt, das nach unten hin vorsteht (Fig. 3). Dadurch werden Geräusche vermieden, falls der Verschlußhaken 20 in Kontakt mit der Oberseite des plattenförmigen Griffabschnitts 26 gelangt und verhindert so formschlüssig ein Ausweichen des Verschlußhakens 20 nach unten aus der Kulisse. In einem vorderen Bereich des Gehäuses 18 ist der Verschlußhaken 20 mittels einer federbelasteten Schwinge 65 nach oben hin beaufschlagt. Die federbelastete Schwinge 65 setzt sich zwei seitlich außenliegenden Armen 66 und einer Verbindungsstange 67 zusammen, wobei die Arme 66 an der ersten Drehachse 31 zwischen den Wandungen 33, 33' des Gehäuses 18 drehbar gelagert sind. An der Verbindungsstange 67 greift zumindest eine Zugfeder 68 an, die mit ihrem anderen Enden 69 an einem darüberliegenden querverlaufenden Stift 70 eingehängt ist. Das andere Ende der Zugfeder 68 umgreift die Verbindungsstange 67. Diese liegt an der Unterseite des Verschlußhakens 20 an. In Querrichtung wird der Verschlußhaken 20 durch eine schlitzförmige Ausnehmung 73 der vorderen querverlaufenden Gehäusewandung 71 geführt. Die angrenzend an die innere Drucktaste 24 vorgesehenen Befestigungsschrauben 72 werden in Schließstellung des Verschlusses 13 durch den hochgeklappten Bügelgriff 25 abgedeckt (Fig. 7). Die federbelastete Drucktaste 24 wird durch zwei Druckfedern 75 nach unten gedrückt. Jede Druckfeder 75 ist mit ihrem einen Ende in eine zylindrische Aufnahme 76 der Drucktaste 24 eingesetzt, wogegen sich das andere Ende am Boden des Gehäuses 18 abstützt (Fig. 13).

Das Öffnen des in Fig. 3 eine Schließstellung E einnehmenden Verschlusses 13 erfolgt wie nachfolgend beschrieben: Zuerst wird die Drucktaste 24 nach oben gedrückt. Dies hat zur Folge, daß einerseits die äußeren Sperrklinken 36 eine Schwenkbewegung im Uhrzeigersinn ausüben, so daß die nasenförmigen Abstellungen 40 von den Rasten 41 der Funktionsscheibe 37 freigeschwenkt werden und sich entgegen dem Uhrzeigersinn bewegen. Andererseits wird die obere Nase 54 der mittleren Sperrklinke 52 von der Abflachung 53 des Bolzens 49 um die Oberseite des Bolzens 49 herumgeführt und der Bolzen 49 gelangt in die U-förmige Ausnehmung 57 der Sperrklinke 52. Durch das Gewicht des Bügelgriffes 25 und eventuelle Federunterstützung (z.B. Torsionsfeder) wird der Bügelgriff 25 nach unten in eine Greifstellung F abgesenkt, wobei sich infolge der Schlitzöffnungen 51, 51' in den Laschen 47 der Bügelgriff 25 relativ zum Gehäuse 18 bewegt. In der abgesenkten Greifstellung F ist die Verriegelung zwischen der Kulisse 19 und dem Verschlußhaken 20 noch voll wirksam. Durch manuelles Umgreifen des Bügelgriffes 25 von oben und anschließendes Schwenken des Bügelgriffes 25 entgegen dem Uhrzeigersinn nach hinten gelangt der Verschlußhaken 20 außer Eingriff mit der Kulisse 19.

In der Offenstellung G (Fig. 5) verrastet der Bügelgriff 25, da die äußeren Sperrklinken 36 mit der zweiten Raste 42 der Funktionsscheiben 37 in Wirkverbindung stehen. Diese Verrastung läßt sich jedoch manuell überdrücken. Der Bügelgriff 25 rastet in beiden Einstellungen E, G hörbar ein. Die Bewegungskurve 77 des Verschlußhakens 20 ist in Fig. 5 strichpunktiert dargestellt. Das Verriegeln des Verdecks 3 am Rahmen 4 erfolgt in umgekehrter Reihenfolge.

Die in Fig. 4 dargestellte Linie 74 kennzeichnet die Übertotpunktlage des Verschlusses 13, die bereits in der Greifstellung F vorhanden ist und die während des weiteren Verschwenkens des Griffes in die Schließstellung E erhalten bleibt und umgekehrt.

## Patentansprüche

1. Verschluß für ein Verdeck eines Fahrzeuges, insbesondere eines Personenwagens, welches gegen einen feststehenden Windschutzrahmen (4) eines Aufbaus gespannt wird, wobei der Verschluß ein verdeckseitig angeordnetes Gehäuse (18) mit einem um eine querverlaufende, etwa horizontal ausgerichtete Drehachse des Gehäuses schwenkbar gelagertes Betätigungselement sowie einen um eine weitere querverlaufende, etwa horizontal ausgerichtete Drehachse verschwenkbaren Verschlußhaken (20) umfaßt und daß durch Verschwenken des Betätigungselementes um die horizontale Drehachse unmittelbar der Verschlußhaken (20) angesteuert wird, der mit einer am Rahmen (4) angebrachten Kulisse (19) zusammenwirkt, **dadurch gekennzeichnet, daß** in Schließstellung E des Verschlusses (13) ein erstes und ein zweites Betätigungselement (21, 22) des Verschlusses (13) versenkt in einer Ausnehmung (23) des Verdeckrahmens (15) angeordnet sind und daß die beiden Betätigungselemente (21, 22) derart zusammenwirken, daß erst nach Betätigen des ersten Betätigungselementes (21) das zweite Betätigungselement (22) in eine abgesenkte Greifstellung F bewegbar ist.

2. Verschluß nach Anspruch 1, **dadurch gekennzeichnet, daß** die beiden Betätigungselemente (21, 22) in Schließstellung E annähernd oberflächenbündig zueinander und zu den angrenzenden dem Fahrgastraum (28) zugekehrten Konturen des Verdeckrahmens (15) und der Kulisse (19) verlaufen.

3. Verschluß nach den Ansprüchen 1 und 2, **dadurch gekennzeichnet, daß** das erste Betätigungselement (21) durch eine am Gehäuse (18) schwenkbar gelagerte, federbelastete Drucktaste (24) gebildet wird.

4. Verschluß nach den Ansprüchen 1 und 2, **dadurch gekennzeichnet, daß** das zweite Betätigungselement (22) durch einen am Gehäuse (18) schwenkbar gelagerten Bügelgriff (25) gebildet wird.

5. Verschluß nach den Ansprüchen 1 bis 4, **dadurch gekennzeichnet, daß** die Drucktaste (24) umfangseitig von einem plattenförmigen Griffabschnitt (26) des Bügelgriffs (25) umgeben ist.

6. Verschluß nach wenigstens einem der Ansprüche 1 bis 5, **dadurch gekennzeichnet, daß** die beiden Betätigungselemente (21, 22) in Schließstellung (E) des Verschlusses (13) das Gehäuse (18), den Verschlußhaken (20) und weitere Funktionsbauteile des Verschlusses (13) zum Fahrgastraum (28) hin nahezu vollständig abdecken.

7. Verschluß nach einem oder mehreren der vorangegangenen Ansprüche, **dadurch gekennzeichnet, daß** die Drucktaste (24) an einer querverlaufenden, etwa horizontal ausgerichteten ersten Drehachse (31) des Gehäuses (18) gelagert ist, wobei die Drehachse (31) durch zwei mit Abstand zueinander angeordnete fluchtende Bolzen (32, 32') gebildet wird.

8. Verschluß nach einem oder mehreren der vorangegangenen Ansprüche, **dadurch gekennzeichnet, daß** die Drucktaste (24) über eine Rasteinrichtung (35) mit dem Bügeigriff (25) in Wirkverbindung steht, wobei durch die Rasteinrichtung (35) der Bügelgriff (25) in seinen beiden Endstellungen (E, G) arretiert ist.

9. Verschluß nach Anspruch 8, **dadurch gekennzeichnet, daß** die Rasteinrichtung (35) zumindest eine mit der Drucktaste (24) fest verbundene äußere Sperrklinke (36) umfaßt, die mit einer am Bügelgriff (25) angebrachten Funktionsscheibe (37) zusammenwirkt.

10. Verschluß nach den Ansprüchen 8 und 9, **dadurch gekennzeichnet, daß** an der Funktionsscheibe (37) zwei mit Abstand zueinander angeordnete Rasten (41, 42) ausgebildet sind, wobei in jeder Endstellung (E, G) des Verschlusses (13) eine nasenförmige Abstellung (40) der Sperrklinke (36) mit einer dieser Rasten (41, 42) in Wirkverbindung steht.

11. Verschluß nach einem oder mehreren der vorangegangenen Ansprüche, **dadurch gekennzeichnet, daß** der Bügelgriff (25) um eine querverlaufende etwa horizontal ausgerichtete zweite Drehachse (45) mit dem Gehäuse (18) drehbar verbunden ist, wobei die zweite Drehachse (45) durch zwei fluchtende, beiderseits des mittig verlaufenden Verschlußhakens (20) angeordnete Bolzen (46, 46') gebildet wird.

12. Verschluß nach einem oder mehrere der vorangegangen Ansprüche, **dadurch gekennzeichnet, daß** der Verschlußhaken (20) über zumindest einen Antriebshebel (44) mit dem Bügelgriff (25) verbunden ist.

13. Verschluß nach den Ansprüchen 11 und 12, **dadurch gekennzeichnet, daß** auf beiden Bolzen (46, 46') jeweils ein Antriebshebel (44) gelagert ist, wobei die beiden Antriebshebel (44) über einen durchgehenden Bolzen (49) fest miteinander verbunden sind, der durch längliche Schlitzöffnungen (51, 51') von beabstandeten Laschen (47) des Bügelgriffs (25) hindurchgeführt ist und der in einen mittleren Bereich seiner Quererstreckung mit dem hinteren Ende des Verschlußhakens (20) drehbar verbunden ist.

14. Verschluß nach Anspruch 13, **dadurch gekennzeichnet, daß** sich der Verschlußhaken (20) aus zwei mit geringem Abstand zueinander verlaufenden plattenförmigen Teilen (55, 56) zusammensetzt, die örtlich fest miteinander verbunden sind.

15. Verschluß nach Anspruch 14, **dadurch gekennzeichnet, daß** am Bügelgriff (25) eine mittlere Sperrklinke (52) schwenkbar gelagert ist, die sich abschnittsweise zwischen den beiden plattenförmigen Teilen (55, 56) des Verschlußhakens (20) erstreckt.

16. Verschluß nach Anspruch 15, **dadurch gekennzeichnet, daß** die mittlere Sperrklinke (52) an einem oberen Schenkel eine U-förmige Ausnehmung (57) und eine daran anschließende Nase (54) aufweist, wobei je nach Stellung des Bügelgriffes (25) die Nase (54) oder die Ausnehmung (57) mit dem die Antriebshebel (44) verbindenden Bolzen (49) zusammenwirken.

17. Verschluß nach Anspruch 15, **dadurch gekennzeichnet, daß** ein unterer gebogener Schenkel (58) der mittleren Sperrklinke (52) mit seinem freien Ende mit einer am Gehäuse (18) angebrachten Führungsbahn (59) zusammenwirkt.

18. Verschluß nach einem oder mehreren der vorangegangenen Ansprüche, **dadurch gekennzeichnet, daß** der Verschlußhaken (20) in einem vorderen Bereich des Gehäuses (18) mittels einer federbelasteten Schwinge (65) nach oben hin beaufschlagt ist.

19. Verschluß nach Anspruch 18, **dadurch gekennzeichnet, daß** sich die Schwinge (65) aus zwei seitlichen Armen (66) und einer Verbindungsstange (67) zusammensetzt, wobei die Arme (66) an der ersten Drehachse (31) schwenkbar gelagert sind und daß an der Verbindungsstange (67) Zugfedern (68) angreifen, die sich mit ihren anderen Enden (69) an einer darüberliegenden Achse (70) abstützen.

20. Verschluß nach einem oder mehreren der vorangegangenen Ansprüche, **dadurch gekennzeichnet, daß** die Befestigungsschrauben (72) zum Festlegen des Gehäuses (18) am darüberliegenden Verdeckrahmen (15) in Schließstellung (E) des Verschlusses (13) durch den Bügelgriff (25) zum Fahrgastraum (28) hin abgedeckt sind.

21. Verschluß nach Anspruch 1, **dadurch gekennzeichnet, daß** in Greifstellung (F) des zweiten Betätigungselementes (22) die Verriegelung zwischen Verschlußhaken (20) und Kulisse (19) noch voll wirksam ist.

## Claims

1. A closure for a roof of a vehicle, in particular a passenger car. which is clamped against a fixed windscreen frame (4) of a body, the lock comprising a housing (18) arranged on the roof and with an actuating member mounted so as to be pivotable about an axis of rotation - extending transversely and orientated substantially horizontally - of the housing as well as a closure hook (20) pivotable about a further axis of rotation extending transversely and orientated substantially horizontally, and the closure hook (20), which cooperates with a slide block (19) mounted on the frame (4), is actuated directly as a result of the pivoting of the actuating member about the horizontal axis of rotation, **characterized in that** in the closed position **E** of the closure (13) a first and a second actuating member (21, 22) of the closure (13) is arranged sunk in a recess (23) in the roof frame (15), and the two actuating members (21, 22) cooperate in such a way that only after the first actuating member (21) is actuated is the second actuating member (22) movable into a sunk gripping position **F.**

2. A closure according to Claim 1, **characterized in that** in the closed position **E** the two actuating members (21, 22) extend with the surfaces thereof substantially flush with each other and with the adjacent contours of the roof frame (15) facing the passenger compartment (28) and of the slide block (19).

3. A closure according to Claims I and 2. **characterized in that** the first actuating member (21) is formed by a spring-loaded push button (24) mounted pivotably on the housing (18).

4. A closure according to Claims 1 and 2, **characterized in that** the second actuating member (22) is formed by a bow-type handle (25) mounted pivotably on the housing (18).

5. A closure according to Claims 1 to 4, **characterized in that** the push button (24) is surrounded on the periphery by a plate-shaped gripping portion (26) of the bow-type handle (25).

6. A closure according to at least one of Claims 1 to 5, **characterized in that** in the closed position (**E**) of the closure (13) the two actuating members (21, 22) cover the housing (18), the closure hook (20) and further functional components of the closure (13) towards the passenger compartment (28) almost completely.

7. A closure according to one or more of the preceding Claims, **characterized in that** the push button (24) is mounted on a first axis of rotation (31) - extending transversely and orientated substantially horizontally - of the housing (18), wherein the axis of rotation (31) is formed by aligned two pins (32, 32') arranged at a distance from each other.

8. A closure according to one or more of the preceding Claims, **characterized in that** the push button (24) is operatively connected to the bow-type handle (25) by way of a catch device (35). wherein the bow-type handle (25) is locked in the two end positions (**E, G**) thereof by the catch device (35).

9. A closure according to Claim 8, **characterized in that** the catch device (35) comprises at least one outer locking pawl (36) which is connected to the push button (24) in a fixed manner and which cooperates with an operating disc (37) mounted on the bow-type handle (25).

10. A closure according to Claims 8 and 9, **characterized in that** two catches (41, 42) arranged at a distance from each other are formed on the operating disc (37), wherein a nose-shaped projection (40) on the locking pawl (36) is operatively connected to one of the said catches (41, 42) in each end position (**E, G**) of the closure (13).

11. A closure according to one or more of the preceding Claims, **characterized in that** the bow-type handle (25) is connected to the housing (18) so as to be rotatable about a second axis of rotation (45) extending transversely and orientated substantially horizontally. wherein the second axis of rotation (45) is formed by two aligned pins (46, 46') arranged on both sides of the closure hook (20) extending centrally.

12. A closure according to one or more of the preceding Claims, **characterized in that** the closure hook (20) is connected to the bow-type handle (25) by way of at least one drive lever (44).

13. A closure according to Claims 11 and 12, **characterized in that** one respective drive lever (44) is mounted on the two pins (46, 46') in each case, wherein the two drive levers (44) are connected to each other in a fixed manner by way of a continuous pin (49) which passes through elongate slot openings (51, 51') of spaced fastening plates (47) of the bow-type handle (25) and which is connected in a middle region of its transverse extension to the rear end of the closure hook (20) in a rotatable manner.

14. A closure according to Claim 13, **characterized in that** the closure hook (20) is formed by two plate-shaped parts (55. 56) which extend at a slight distance from each other and which are connected to each other locally in a fixed manner.

15. A closure according to Claim 14, **characterized in that** a middle locking pawl (52), which extends in part between the two plate-shaped parts (55, 56) of the closure hook (20), is rotatably mounted on the bow-type handle (25).

16. A closure according to Claim 15, **characterized in that** the middle locking pawl (52) is provided on an upper arm with a U-shaped recess (57) and a nose (54) adjoining it. wherein, depending upon the position of the bow-type handle (25), the nose (54) or the recess (57) cooperates with the pin (49) connecting the drive levers (44).

17. A closure according to Claim 15, **characterized in that** a lower curved arm (58) of the middle locking pawl (52) cooperates at its free end with a guide path (59) attached to the housing (18).

18. A closure according to one or more of the preceding Claims. **characterized in that** the closure hook (20) is acted upon upwards in a front region of the housing (18) by means of a spring-loaded rocker (65).

19. A closure according to Claim 18, **characterized in that** the rocker (65) is formed by two lateral arms (66) and a connecting rod (67), wherein the arms (66) are pivotably mounted on the first axis of rotation (31). and tensile springs (68) engage on the connecting rod (67) and are supported at their other ends (69) on a shaft (70) situated thereabove.

20. A closure according to one or more of the preceding Claims, **characterized in that** the fastening bolts (72) for securing the housing (18) on the roof frame (15) situated thereabove are covered towards the passenger compartment (28) by the bow-type handle (25) in the closed position (**E**) of the closure (13).

21. A closure according to Claim 1, **characterized in that the** locking between the closure hook (20) and the slide block (19) is still fully effective in the gripping position (**F**) of the second actuating member (22).

## Revendications

1. Fermeture destinée à une capote d'un véhicule, en particulier d'une voiture de tourisme, qui est serrée contre un cadre de pare-brise (4) fixe d'une carrosserie, la fermeture comprenant un boîtier (18) côté capote avec un élément d'actionnement monté de manière à pouvoir pivoter autour d'un axe de rotation, s'étendant transversalement et orienté à peu près horizontalement, du boîtier, ainsi qu'un crochet de fermeture (20) pouvant pivoter autour d'un autre axe de rotation s'étendant transversalement et orienté à peu près horizontalement, et, par pivotement de l'élément d'actionnement autour de l'axe de rotation horizontal, le crochet de fermeture (20), qui coopère avec une coulisse (19) placée sur le cadre (4), est commandé directement, **caractérisée en ce qu'**en position fermée (E) de la fermeture (13), un premier et un deuxième éléments d'actionnement (21, 22) de la fermeture (13) sont disposés encastrés dans un évidement (23) du cadre de capote (15), et **en ce que** les deux éléments d'actionnement (21, 22) coopèrent de manière qu'après actionnement du premier élément d'actionnement (21), le deuxième élément d'actionnement (22) est déplaçable dans une position de prise (F) abaissée.

2. Fermeture selon la revendication 1, **caractérisée en ce qu'**en position fermée (E), les surfaces des deux éléments d'actionnement (21, 22) sont approximativement à même niveau entre elles, et avec les contours adjacents, tournés vers l'habitacle (28), du cadre de capote (15) et de la coulisse (19).

3. Fermeture selon les revendications 1 et 2, **caractérisée en ce que** le premier élément d'actionnement (21) est formé par une touche à enfoncement (24) soumise à l'action d'un ressort et montée pivotante sur le boîtier (18).

4. Fermeture selon les revendications 1 et 2, **caractérisée en ce que** le deuxième élément d'actionnement (22) est formé par une poignée en étrier (25) montée pivotante sur le boîtier (18).

5. Fermeture selon les revendications 1 à 4, **caractérisée en ce que** la touche à enfoncement (24) est entourée périphériquement par une partie de poignée (26) en forme de plaque de la poignée en étrier (25).

6. Fermeture selon l'une au moins des revendications 1 à 5, **caractérisée en ce que** les deux éléments d'actionnement (21, 22), en position fermée (E) de la fermeture (13), recouvrent presque totalement le boîtier (18), le crochet de fermeture (20) et d'autres composants fonctionnels de la fermeture (13), vers l'habitacle (28).

7. Fermeture selon une ou plusieurs des revendications précédentes, **caractérisée en ce que** la touche à enfoncement (24) est montée sur un premier axe de rotation (31), s'étendant transversalement et orienté à peu près horizontalement, du boîtier (18), l'axe de rotation (31) étant formé par deux tiges (32, 32') alignées, disposées à distance l'une de l'autre.

8. Fermeture selon une ou plusieurs des revendications précédentes, **caractérisée en ce que** la touche à enfoncement (24) est en liaison active avec la poignée en étrier (25), par un dispositif d'arrêt (35), la poignée en étrier (25) étant bloquée dans ses deux positions de fin de course (E, G) par le dispositif d'arrêt (35).

9. Fermeture selon la revendication 8, **caractérisée en ce que** le dispositif d'arrêt (35) comprend au moins un cliquet de blocage (36) extérieur solidaire de la touche à enfoncement (24) et qui coopère avec un disque fonctionnel (37) placé sur la poignée en étrier (25).

10. Fermeture selon les revendications 8 et 9, **caractérisée en ce que** sur le disque fonctionnel 37 sont formés deux crans d'arrêt (41, 42) disposés à distance l'un de l'autre, un appendice (40) en forme d'ergot du cliquet de blocage (36) étant en liaison avec l'un de ces crans d'arrêt (41, 42), dans chaque position de fin de course (E, G) de la fermeture (13).

11. Fermeture selon une ou plusieurs des revendications précédentes, **caractérisée en ce que** la poignée en étrier (25) est reliée au boîtier (18) de manière à pouvoir tourner autour d'un deuxième axe de rotation (45) s'étendant transversalement et orienté à peu près horizontalement, le deuxième axe de rotation (45) étant formé par deux tiges (46, 46') alignées, disposées de part et d'autre du crochet de fermeture (20) s'étendant au milieu.

12. Fermeture selon une ou plusieurs des revendications précédentes, **caractérisée en ce que** le crochet de fermeture (20) est relié à la poignée en étrier (25), par au moins un levier d'entraînement (44).

13. Fermeture selon les revendications 11 et 12, **caractérisée en ce que** sur chacune des deux tiges (46, 46') est monté un levier d'entraînement (44), les deux leviers d'entraînement (44) étant reliés fixement entre eux par une tige (49) traversante qui passe à travers des ouvertures en fente (51, 51') oblongues d'attaches (47) espacées de la poignée en étrier (25), et qui, dans une zone centrale de son étendue transversale, est reliée, de manière à pouvoir tourner, à l'extrémité arrière du crochet de fermeture (20).

14. Fermeture selon la revendication 13, **caractérisée en ce que** le crochet de fermeture (20) se compose de deux parties (55, 56) en forme de plaque s'étendant à faible distance l'une de l'autre et qui sont reliées fixement entre elles par endroits.

15. Fermeture selon la revendication 14, **caractérisée en ce que** sur la poignée en étrier (25) est monté pivotant un cliquet de blocage (52) central qui s'étend, par endroits, entre les deux parties (55, 56) en forme de plaque du crochet de fermeture (20).

16. Fermeture selon la revendication 15, **caractérisée en ce que** le cliquet de blocage 52 central présente, sur une branche supérieure, un évidement (57) en U et un ergot (54) s'y rattachant, l'ergot (54) ou l'évidement (57) coopérant avec la tige (49) reliant les leviers d'entraînement (44), suivant la position de la poignée en étrier (25).

17. Fermeture selon la revendication 15, **caractérisée en ce qu'**une branche (58) arquée inférieure du cliquet de blocage central (52) coopère, par son extrémité libre, avec une voie de guidage (59) prévue sur le boîtier (18).

18. Fermeture selon une ou plusieurs des revendications précédentes, **caractérisée en ce que** le crochet de fermeture (20) est sollicité vers le haut dans une zone avant du boîtier (18), au moyen d'une biellette (65) soumise à l'action d'un ressort.

19. Fermeture selon la revendication 18, **caractérisée en ce que** la biellette (65) se compose de deux bras latéraux (66) et d'une tige de liaison (67), les bras (66) étant montés de manière à pouvoir pivoter sur le premier axe de rotation (31), et **en ce que** sur la tige de liaison (67) agissent des ressorts de traction (68) qui prennent appui, par leurs autres extrémités (69), contre un axe (70) situé au-dessus.

20. Fermeture selon une ou plusieurs des revendications précédentes, **caractérisée en ce que** les vis de fixation (72), pour la fixation du boîtier (18) sur le cadre de capote (15) situé au-dessus, sont recouvertes vers l'habitacle (28), par la poignée en étrier (25), en position fermée (E) de la fermeture (13).

21. Fermeture selon la revendication 1, **caractérisée en ce qu'**en position de prise (F) du deuxième élément d'actionnement (22), le verrouillage entre le crochet de fermeture (20) et la coulisse (19) est encore pleinement opérant.
